# EUROPÄISCHE PATENTANMELDUNG

(11) **EP 2 133 550 A2**
(43) Veröffentlichungstag der Anmeldung: **16.12.2009**
(21) Anmeldenummer: 09006062.5
(22) Anmeldetag: 04.05.2009
(51) Int. Cl.: F02M 35/024

(54) **Filterelement mit einem 2-K-Rahmen**

(30) Priorität: 10.06.2008 DE 102008027507
(71) Anmelder: Carl Freudenberg KG, 69469 Weinheim (DE)
(72) Erfinder: Felber, Uwe, 69518 Abtsteinach (DE); Stahl, Ulrich, 69514 Laudenbach (DE); Marin, Claudio, 68789 St. Leon-Rot (DE)

(57) **Zusammenfassung**

Ein Filterelement zur Verwendung als Motorzuluftfilter, umfassend einen Rahmen (1) und ein Filtermedium (2), wobei der Rahmen (1) das Filtermedium (2) zumindest teilweise umgibt und wobei der Rahmen (1) ein vom Filtermedium (2) abragendes Dichtmittel (3) umfasst, ist im Hinblick auf die Aufgabe, ein Filterelement anzugeben, welches bei kostengünstiger Fertigung eine sehr hohe Abscheideleistung zeigt, **dadurch gekennzeichnet, dass** der Rahmen (1) als Zwei-Komponenten-Bauteil ausgebildet ist, welches das Dichtmittel (3) und eine Aufnahme (4) für das Filtermedium (2) umfasst

## Beschreibung

### Technisches Gebiet

Die Erfindung betrifft ein Filterelement zur Verwendung als Motorzuluftfilter, umfassend einen Rahmen und ein Filtermedium, wobei der Rahmen das Filtermedium zumindest teilweise umgibt und wobei der Rahmen ein vom Filtermedium abragendes Dichtmittel umfasst.

### Stand der Technik

Filterelemente der eingangs genannten Art sind aus dem Stand der Technik bereits bekannt. Insbesondere ist es bekannt, einen Rahmen aus Kunststoff auszugestalten, der einen abragenden Flansch aufweist. Dieser Flansch dient der Anlage an einem Gehäuse, welches das Filterelement aufnimmt.

Die aus dem Stand der Technik bekannten Filterelemente können jedoch aufgrund der Materialeigenschaften des Rahmens nur Abscheideleistungen von etwa 96% gemäß DIN ISO 5011 erzielen.

Insbesondere in der Motorzuluftfiltration besteht jedoch ein Bedarf nach einer Abscheideleistung von mindestens 99%. Diese Abscheideleistungen können die aus dem Stand der Technik bekannten Filterelemente jedoch nicht erzielen.

### Darstellung der Erfindung

Der Erfindung liegt daher die Aufgabe zu Grunde, ein Filterelement zur Verwendung als Motorzuluftfilter zu schaffen, welches bei kostengünstiger Fertigung eine sehr hohe Abscheideleistung zeigt.

Erfindungsgemäß wird die voranstehende Aufgabe mit den Merkmalen des Patentanspruchs 1 gelöst.

Danach ist ein Filterelement zur Verwendung als Motorzuluftfilter **dadurch gekennzeichnet, dass** der Rahmen als Zwei-Komponenten-Bauteil ausgebildet ist, welches das Dichtmittel und eine Aufnahme für das Filtermedium umfasst.

Erfindungsgemäß ist erkannt worden, dass die Ausgestaltung des Rahmens als Zwei-Komponenten-Bauteil erlaubt, dem Rahmen zwei Funktionen zuzuweisen. Der Rahmen kann einerseits das Filtermedium hinreichend stabil abstützen, um eine Verwindung des Filtermediums bei auftretenden Druckdifferenzen zu vermeiden. Andererseits kann der Rahmen im Bereich des Dichtmittels derart deformierbar oder duktil ausgebildet werden, dass das Dichtmittel sich problemlos an die Wandung eines Gehäuses dichtend anlegt. Erfindungsgemäß ist weiter erkannt worden, dass ein Zwei-Komponenten-Bauteil aus Kunststoff eine kostengünstige Fertigung des gesamten Filterelements erlaubt. Auf eine nachträgliche Anbringung eines Dichtmittels an einen hinreichend verwindungssteifen Rahmen kann verzichtet werden.

Folglich ist die eingangs genannte Aufgabe gelöst.

Vor diesem Hintergrund könnte das abragende Dichtmittel aus einer ersten Komponente und die Aufnahme aus einer zweiten Komponente bestehen, wobei die erste Komponente weicher ausgebildet ist als die zweite Komponente. Die Komponenten könnten aus thermoplastischen Elastomeren bestehen, die im Hinblick auf ihre Weichheit aufeinander abgestimmt sind. Durch diese konkrete Ausgestaltung ist es möglich, die Aufnahme derart hart und steif auszubilden, dass das Filtermedium durch die Aufnahme stabil abgestützt wird. Auch bei auftretenden Druckdifferenzen zwischen Anströmseite und Abströmseite wird das Filtermedium nicht verwunden oder verbogen. Hierdurch wird die Ausbildung von Spalten oder Ritzen vermieden. Die Verwendung einer weicheren Komponente für das Dichtmittel erlaubt es, das Dichtmittel derart weich auszugestalten, dass es sich an die Wandung eines Gehäuses für das Filterelement problemlos dichtend anschmiegt. Auch hierdurch wird die Ausbildung von Ritzen oder Spalten bei auftretenden Druckdifferenzen vermieden. In der Motorzuluftfiltration können Druckdifferenzen zwischen Anströmseite und Abströmseite in Höhe von 40 Millibar auftreten. Durch die Verwendung zweier unterschiedlich harter bzw. weicher Komponenten können bei dieser Druckdifferenz Abscheideleistungen von mindestens 99% gemäß DIN ISO 5011 erzielt werden.

Das Dichtmittel könnte als das Filtermedium umfänglich umgebender Dichtwulst ausgestaltet sein. Diese konkrete Ausgestaltung erlaubt eine zuverlässige Abdichtung der Anströmseite von der Abströmseite. Ein Dichtwulst kann in beliebigen geometrischen Formen ausgestaltet sein.

Im Dichtwulst könnte eine Nut ausgebildet sein. Durch diese konkrete Ausgestaltung ist es möglich, in der Nut eine weitere Dichtung zu positionieren. Des Weiteren kann die Nut im Sinne einer Nut-Feder-Verbindung auf einen abragenden Rand der Wandung eines Gehäuses aufgesetzt werden. Hierdurch wird die Dichtwirkung weiter verbessert.

Vor diesem Hintergrund ist denkbar, dass das Dichtmittel als das Filtermedium umfänglich umgebende Dichtlippe ausgebildet ist. Diese konkrete Ausgestaltung erlaubt, die Dichtlippe derart V-förmig abragend auszugestalten, dass sie durch ein anströmendes Fluid gegen die Wandung eines Gehäuses gepresst wird.

Das Filtermedium könnte in den Rahmen eingeklebt sein. Dabei könnte ein Polyurethan-Klebstoff verwendet werden. Das Einkleben des Filtermediums in den Rahmen erlaubt die Vermeidung von Spalten oder Ritzen zwischen Rahmen und Filtermedium.

Vor diesem Hintergrund ist ebenfalls denkbar, dass der Rahmen an das Filtermedium angespritzt ist. Durch diese konkrete Ausgestaltung können ebenfalls Spalten und Ritzen zwischen Rahmen und Filtermedium vermieden werden. Des Weiteren erlaubt diese konkrete Ausgestaltung einen schnellen Fertigungsprozess, nämlich einen Zwei-Komponenten-Spritzgießprozess.

Das Filtermedium könnte als Faltenbalg aus einem Vliesstoff ausgebildet sein. Die Verwendung eines Faltenbalgs erlaubt die Erhöhung der effektiven Filterfläche. Vor diesem Hintergrund ist konkret denkbar, dass das Filtermedium als so genannter Flachfilter ausgestaltet ist. Vliesstoffe sind im Hinblick auf ihre Porosität und Abscheideleistung problemlos einstellbar. Des Weiteren können Vliesstoffe aus Kunststoffen hergestellt werden und sind daher gegen Feuchtigkeit resistent.

Der Rahmen könnte eine Eingriffsleiste aufweisen, die mit dem Filtermedium in Eingriff steht. Durch diese konkrete Ausgestaltung ist es möglich, dass die Eingriffleiste längs der Wandungen zweier Falten verläuft und dadurch die Enden des Filtermediums stabilisiert. Des Weiteren können relative feine und dünne Wandungen der Falten realisiert werden, da diese einerseits durch die Aufnahme des Rahmens und andererseits durch die Eingriffsleiste abgestützt werden.

Der Rahmen könnte aus thermoplastischen Elastomeren gefertigt sein. Durch diese konkrete Ausgestaltung ist der Rahmen als Zwei-Komponenten-Spritzgussteil ausgestaltbar.

Es gibt nun verschiedene Möglichkeiten, die Lehre der vorliegenden Erfindung auf vorteilhafte Weise auszugestalten und weiterzubilden. Dazu ist einerseits auf die nachgeordneten Ansprüche, andererseits auf die nachfolgende Erläuterung eines bevorzugten Ausführungsbeispiels der Erfindung anhand der Zeichnung zu verweisen.

In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert.

### Kurzbeschreibung der Zeichnung

In der Zeichnung zeigen
- Fig. 1: eine perspektivische Darstellung des Filterelements in einer Ansicht auf die Anströmseite,
- Fig. 2: eine perspektivische Ansicht des Filterelements in einer Ansicht auf die Abströmseite,

- Fig. 3: eine Draufsicht auf das Filterelement,
- Fig. 4: eine Schnittansicht des Filterelements gemäß Fig. 3 längs der Linie A-A,
- Fig. 5: eine Schnittansicht des Rahmens gemäß Fig. 3 entlang der Schnittlinie A-A,
- Fig. 6: eine Schnittansicht des Filterelements längs der Linie B-B aus Fig. 3 und
- Fig. 7: eine Schnittansicht eines Bereichs des Rahmens, der in Fig. 6 durch einen Kreis gekennzeichnet ist.

### Ausführung der Erfindung

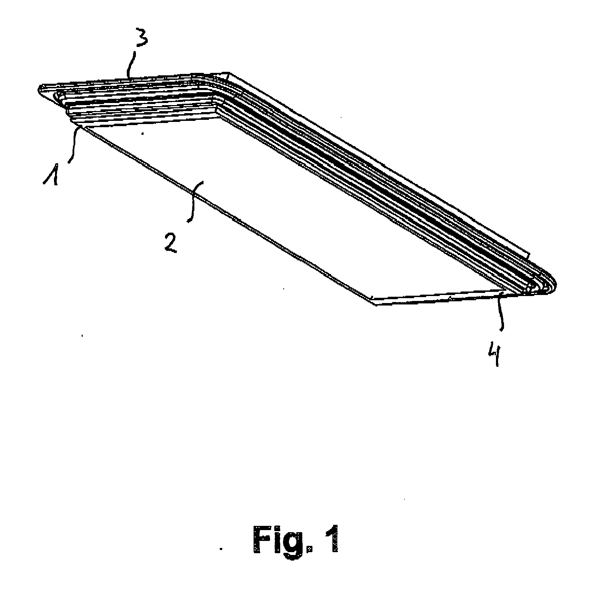

Fig. 1 zeigt eine perspektivische Ansicht eines Filterelements, welches als Motorzuluftfilter Verwendung findet. Dieses Filterelement umfasst einen Rahmen 1, der ein Filtermedium 2 vollständig umgibt, wobei der Rahmen 1 ein vom Filtermedium 2 abragendes Dichtmittel 3 umfasst. Der Rahmen 1 ist als Zwei-Komponenten-Bauteil aus Kunststoff ausgebildet, welches das Dichtmittel 3 und eine Aufnahme 4 für das Filtermedium 2 umfasst. Fig. 1 zeigt eine Ansicht der Anströmseite des Filterelements.

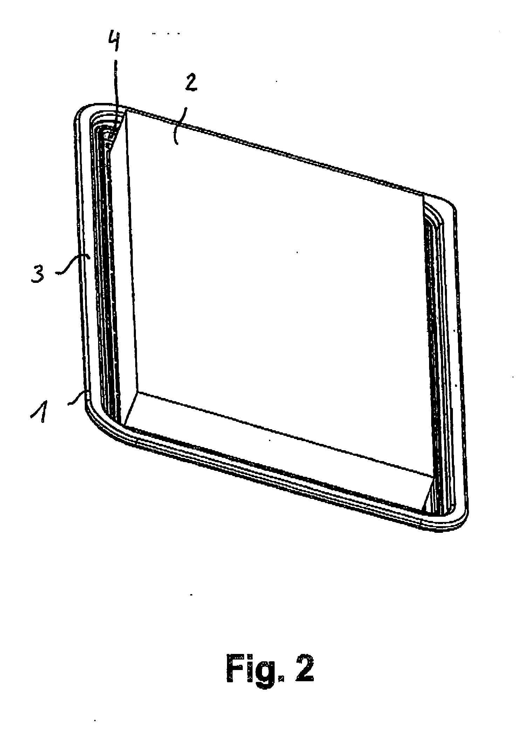

Fig. 2 zeigt eine perspektivische Ansicht des Filterelements gemäß Fig. 1 in einer Ansicht auf die Abströmseite des Filtermediums 2. Fig. 2 ist entnehmbar, dass das Filtermedium 2, welches als Faltenbalg aus einem Vliesstoff ausgebildet ist, mit dem Rahmen 1 verliersicher verbunden ist. Der Rahmen 1 weist ein Dichtmittel 3 und eine Aufnahme 4 auf.

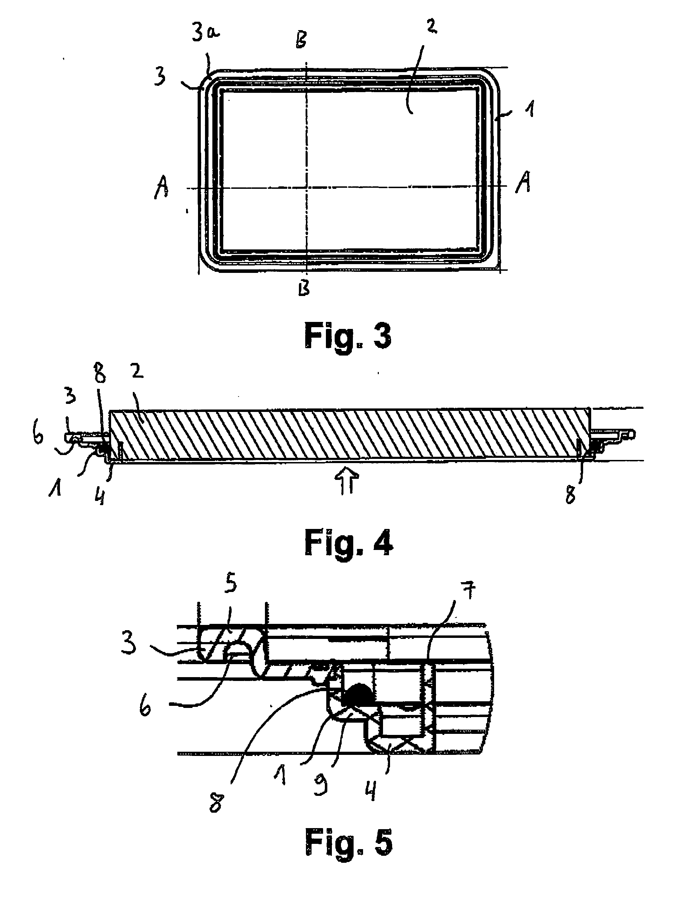

Fig. 3 zeigt eine Ansicht des Filterelements gemäß der Fig. 1 und Fig. 2 in einer Ansicht auf die Abströmseite. In Fig. 3 ist erkennbar, dass der Rahmen 1 das Filtermedium 2 vollständig umfänglich umgibt. Der Rahmen 1 weist ein Dichtmittel 3 auf, welches abgerundete Bereiche 3a aufweist. Die abgerundeten Bereiche 3a erlauben eine Anlage des Dichtmittels an einer nicht gezeigten Wandung ohne Ausbildung von Faltungen, Spalten oder Ritzen, durch die ein zu filterndes Fluid ungefiltert hindurchtreten kann.

Fig. 4 zeigt eine Schnittansicht des Filterelements gemäß Fig. 1 bis 3 entlang der Linie A-A gemäß Fig. 3. Der Rahmen 1 ist als Zwei-Komponenten-Bauteil ausgebildet, welches das Dichtmittel 3 und die Aufnahme 4 für das Filtermedium 2 umfasst. Das abragende Dichtmittel 3 ist aus einer ersten Komponente und die Aufnahme 4 aus einer zweiten Komponente gefertigt, wobei die erste Komponente weicher ausgebildet ist als die zweite Komponente. Hierdurch ist es möglich, dass sich das Dichtmittel 3 problemlos deformierbar an eine Wandung eines Gehäuses für das Filterelement anschmiegt und dadurch zuverlässig abdichtet. Die Aufnahme 4 ist derart hart ausgebildet, dass bei Auftreten einer Druckdifferenz zwischen Anströmseite und Abströmseite des Filterelements eine Verwindung oder Deformierung des Filtermediums 2 weitgehend vermieden wird. In Fig. 4 gibt der Pfeil die Strömungsrichtung der zu filternden Luft an, die durch die Anströmseite eindringt und aus der Abströmseite austritt.

Das Dichtmittel 3 ist als das Filtermedium 2 umfänglich umgebender Dichtwulst 5 ausgestaltet. Im Dichtwulst 5 ist eine Nut 6 ausgebildet, in der eine weitere Dichtung aufgenommen werden kann. Denkbar ist jedoch auch, dass in der Nut 6 ein komplementär zur Nut 6 ausgebildetes Element der Wandung eines Gehäuses aufgenommen wird. Dies könnte beispielsweise im Sinne einer Nut-Feder-Verbindung realisiert sein.

Fig. 5 zeigt in einer Schnittansicht im Detail den Bereich des Rahmens, der in Fig. 4 in einer Schnittansicht dargestellt ist. Fig. 5 zeigt insbesondere die Nut 6, die im Dichtwulst 5 ausgebildet ist. Fig. 5 ist des Weiteren entnehmbar, dass der Rahmen 1 als Zwei-Komponenten-Bauteil ausgebildet ist, wobei eine Komponente zur Fertigung der Aufnahme 4 und eine andere Komponente zur Fertigung des abragenden Dichtmittels 3 eingesetzt wird. In Fig. 5 ist erkennbar, dass der Rahmen 1 eine Eingriffsleiste 7 aufweist. Die Eingriffsleiste 7 kann zwischen den Wandungen zweier Falten des Filtermediums 2 eingreifen und das Filtermedium dadurch zusätzlich stabilisieren. In Fig. 5 ist des Weiteren eine Kleberaupe 8 gezeigt, welche mit dem Filtermedium 2 eine stoffschlüssige Verbindung eingeht, um eine zuverlässige Abdichtung zu erzielen. Die Kleberaupe 8 stellt sicher, dass zwischen Filtermedium 2 und Rahmen 1 keine Ritzen oder Spalten entstehen, welche die Abscheideleistung negativ beeinträchtigen.

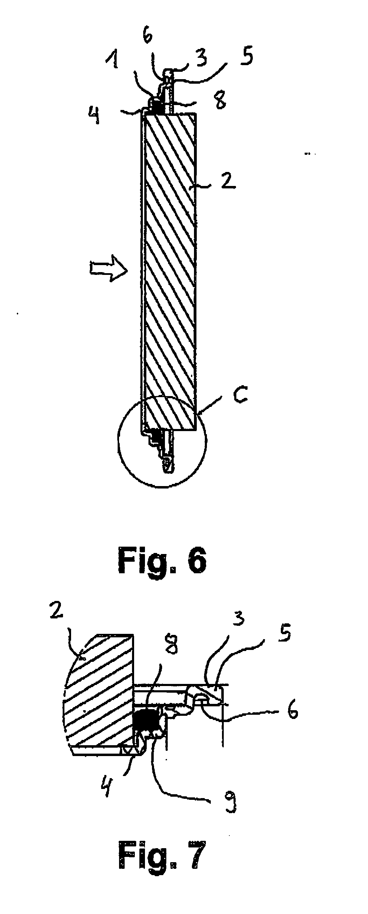

Fig. 6 zeigt in einer Schnittansicht das Filterelement gemäß der Fig. 1 bis 3 entlang der Linie B-B gemäß Fig. 3. Fig. 6 ist ebenfalls der Rahmen 1 entnehmbar, der mit einem abragenden Dichtmittel 3 versehen ist, welches als umlaufender Wulst 5 ausgestaltet ist. Der Rahmen 1 weist des Weiteren eine Aufnahme 4 auf, an welcher das Filtermedium 2 anliegt. Eine Kleberaupe 8 geht eine stoffschlüssige Verbindung mit dem Filtermedium 2 ein. Fig. 6 ist des Weiteren entnehmbar, dass der Dichtwulst 5 mit einer Nut 6 versehen ist. In Fig. 6 gibt der Pfeil die Strömungsrichtung der zu filternden Luft an, die durch die Anströmseite eindringt und aus der Abströmseite austritt.

Fig. 7 zeigt den in Fig. 6 markierten Bereich C des Rahmens 1. In Fig. 7 ist erkennbar, dass der Rahmen 1 als Zwei-Komponenten-Bauteil ausgestaltet ist. Dabei weist der Rahmen 1 eine Aufnahme 4 und ein abragendes Dichtmittel 3 auf, welches als umlaufender Dichtwulst 5 mit einer Nut 6 ausgestaltet ist. Eine Kleberaupe 8 stellt eine stoffschlüssige Verbindung mit dem Filtermedium 2 her. Die Kleberaupe 8 ist auf einem stufenförmigen Absatz 9 der Aufnahme 4 aufgebracht. Die Kleberaupe 8 kann im hier gezeigten Ausführungsbeispiel aus einem Polyurethan-Klebstoff bestehen.

Der Rahmen 1 könnte aus thermoplastischen Elastomeren gefertigt sein.

Hinsichtlich weiterer vorteilhafter Ausgestaltungen und Weiterbildungen der erfindungsgemäßen Lehre wird einerseits auf den allgemeinen Teil der Beschreibung und andererseits auf die Patentansprüche verwiesen.

Abschließend sei ausdrücklich hervorgehoben, dass das zuvor rein willkürlich ausgewählte Ausführungsbeispiel lediglich zur Erörterung der erfindungsgemäßen Lehre dient, diese jedoch nicht auf dieses Ausführungsbeispiel einschränkt.

## Patentansprüche

1. Filterelement zur Verwendung als Motorzuluftfilter, umfassend einen Rahmen (1) und ein Filtermedium (2), wobei der Rahmen (1) das Filtermedium (2) zumindest teilweise umgibt und wobei der Rahmen (1) ein vom Filtermedium (2) abragendes Dichtmittel (3) umfasst, **dadurch gekennzeichnet, dass** der Rahmen (1) als Zwei-Komponenten-Bauteil ausgebildet ist, welches das Dichtmittel (3) und eine Aufnahme (4) für das Filtermedium (2) umfasst.

2. Filterelement nach Anspruch 1, **dadurch gekennzeichnet, dass** das abragende Dichtmittel (3) aus einer ersten Komponente und die Aufnahme (4) aus einer zweiten Komponente besteht, wobei die erste Komponente weicher ausgebildet ist als die zweite Komponente.

3. Filterelement nach Anspruch 1 oder 2, **dadurch gekennzeichnet, dass** das Dichtmittel (3) als das Filtermedium (2) umfänglich umgebender Dichtwulst (5) ausgestaltet ist.

4. Filterelement nach Anspruch 3, **dadurch gekennzeichnet, dass** im Dichtwulst (5) eine Nut (6) ausgebildet ist.

5. Filterelement nach Anspruch 1 oder 2, **dadurch gekennzeichnet, dass** das Dichtmittel (3) als das Filtermedium (2) umfänglich umgebende Dichtlippe ausgebildet ist.

6. Filterelement nach einem der Ansprüche 1 bis 5, **dadurch gekennzeichnet, dass** das Filtermedium (2) in den Rahmen (1) eingeklebt ist.

7. Filterelement nach einem der Ansprüche 1 bis 5, **dadurch gekennzeichnet, dass** der Rahmen (1) an das Filtermedium (2) angespritzt ist.

8. Filterelement nach einem der Ansprüche 1 bis 7, **dadurch gekennzeichnet, dass** das Filtermedium (2) als Flachfilter mit einem Faltenbalg aus einem Vliesstoff ausgebildet ist.

9. Filterelement nach einem der Ansprüche 1 bis 8, **dadurch gekennzeichnet, dass** der Rahmen (1) eine Eingriffsleiste (7) aufweist, die mit dem Filtermedium (2) in Eingriff steht.

10. Filterelement nach einem der Ansprüche 1 bis 9, **dadurch gekennzeichnet, dass** der Rahmen (1) aus thermoplastischen Elastomeren gefertigt ist.
